# EUROPÄISCHE PATENTANMELDUNG

(11) **EP 1 180 530 A2**
(43) Veröffentlichungstag der Anmeldung: **20.02.2002**
(21) Anmeldenummer: 01119019.6
(22) Anmeldetag: 07.08.2001
(51) Int. Cl.: C08F 212/08, C08F 220/18, C08F 257/02, C09J 4/00

(54) **Silanhaltige Polymerdispersionen für Fliesenklebstoffe**

(30) Priorität: 18.08.2000 DE 10040407
(71) Anmelder: BASF AKTIENGESELLSCHAFT, 67056 Ludwigshafen (DE)
(72) Erfinder: Sandor, Mario, Dr., 67283 Obrigheim (DE); Pakusch, Joachim, Dr., 67346 Speyer (DE); Hümmer, Wolfgang, Dr., 67134 Birkenheide (DE); Denu, Hans-Jürgen, 67159 Friedelsheim (DE); Gulden, Rolf, 67227 Frankenthal (DE)

(57) **Zusammenfassung**

Wäßrige Polymerdispersion, dadurch gekennzeichnet, daß die Dispersion 0,0001 bis 1 mol einer hydrolisierbaren Siliziumgruppe und 0,0001 bis 1 mol einer Harnstoff - oder Thioharnstoffgruppe, bezogen jeweils auf 100 g der in der Dispersion vorliegenden Polymeren, enthält.

## Beschreibung

Die Erfindung betrifft wäßrige Polymerdispersion, dadurch gekennzeichnet, daß die Dispersion 0,0001 bis 1 mol einer hydrolisierbaren Siliziumgruppe und 0,0001 bis 1 mol einer Harnstoff - oder Thioharnstoffgruppe, bezogen jeweils auf 100 g der in der Dispersion vorliegenden Polymeren, enthält.

Weiterhin betrifft die Erfindung die Verwendung der Polymerdispersionen als Bindemittel für Klebstoffe und Dichtungsmassen, insbesondere für Fliesenklebstoffe.

Aus EP-A-35332 sind Bindemittel für keramische Fliesen bekannt, welche durch Copolymerisation von ethylenisch ungesättigten Siliciumverbindungen einen Gehalt von hydrolisierbaren Siliciumgruppen aufweisen. In EP-A-366969 werden ebenfalls Bindemittel beschrieben, welche einen Gehalt an hydrolisierbaren Siliciumgruppen aufweisen.

Durch einen Gehalt an hydrolisierbaren Siliciumverbindungen wird die Wasserbeständigkeit von Verklebungen erhöht.

Neben einer hohen Wasserbeständigkeit ist auch eine möglichst hohe Wärmebeständigkeit von Verklebungen erwünscht. Die bisher bekannten Bindemittel zeigen insbesondere bei der Wärmebeständigkeit noch Mängel.

Polymere mit einem Gehalt an Harnstoffgruppen sind z.B. aus EP-A-184091 bekannt.

Aufgabe der vorliegenden Erfindung waren Bindemittel für Klebstoffe, welche wasserfeste und wärmebeständige Verklebungen ergeben.

Demgemäß wurde die eingangs definierte Polymerdispersion und ihre Verwendung als Bindemittel für Klebstoffe und Dichtungsmassen, insbesondere für keramische Fliesen gefunden.

Die erfindungsgemäße wäßrige Polymerdispersion enthält mindestens 0,0001 mol, vorzugsweise mindestens 0,0005 mol einer Harnstoff-oder Thioharnstoffgruppe; sie enthält nicht mehr als 1 Mol, vorzugsweise nicht mehr als 0,5 Mol, insbesondere nicht mehr als 0,1 Mol ganz besonders nicht mehr als 0,05 Mol insbesondere nicht mehr als 0,01 Mol, bezogen jeweils auf 100 g der in der Dispersion dispergierten Polymeren.

Insbesondere handelt es sich um eine Harnstoff- oder Thioharnstoffgruppe der Formel 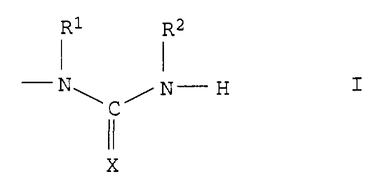 worin R¹ und R² unabhängig voneinander für ein Wasserstoffatom oder eine C₁-C₅-Alkylgruppe stehen oder R¹ und R² zusammen für eine überbrückende C₂-C₄ Alkylengruppe, die bis zu zweifach mit einer C₁ bis C₄ Alkoxygruppe oder einer Hydroxylgruppe substituiert sein kann und X für ein Sauerstoff- oder Schwefelatom steht.

Bevorzugt stehen R¹ und R² unabhängig voneinander für Wasserstoff, eine C₁-C₅ Alkylgruppe oder R¹ und R² zusammen für eine überbrükkende C₂-C₄ Alkylgruppe. X steht bevorzugt für O.

Besonders bevorzugt stehen R¹ und R² zusammen für eine C₂ bis C₄-Alkylengruppe, insbesondere eine Ethylengruppe, welche die beiden N-Atome verbindet.

Die Harnstoff- oder Thioharnstoffgruppe kann Bestandteil einer niedermolekularen, nicht polymeren Verbindung sein, welche im Wasser als Dispersionsmedium gelöst oder dispergiert ist.

Insbesondere haben derartige Verbindungen mindestens 2, vorzugsweise 2 - 4 Harnstoff- oder Thioharnstoffgruppen.

Vorzugsweise ist die Harnstoff- oder Thioharnstoffgruppe an die in der Dispersion dispergierten Polymeren gebunden.

Bei den Polymeren kann es sich um Polykondensate, z.B. Polyester, oder Polyaddukte, z.B. Polyurethane handeln.

Bevorzugt handelt es sich um Polymere, welche durch radikalische oder ionische Polymerisation von ethylenisch ungesättigten Verbindungen (Monomere) erhältlich sind (kurz: radikalisch polymerisierte Polymere).

Die Harnstoff- oder Thioharnstoffgruppe kann z.B. durch polymeranaloge Umsetzung an das Polymer gebunden werden.

Vorzugsweise werden bei der Herstellung der Polymeren geeignete Ausgangsverbindungen mitverwendet, die bereits eine Harnstoff-oder Thioharnstoffgruppe enthalten. Im bevorzugten Fall der radikalisch polymerisierten Polymere werden insbesondere Monomere mit einer Harnstoff- oder Thioharnstoff bei der Polymerisation eingesetzt. (Monomer A)

Derartige Monomere haben neben der Harnstoff- oder Thioharnstoffgruppe mindestens eine, vorzugsweise eine copolymerisierbare ethylenisch ungesättigte Gruppe.

Bei dieser copolymerisierbaren, ethylenisch ungesättigten Gruppe in Monomeren A handelt es sich vorzugsweise um eine Acryl- oder Methacrylgruppe.

Geeignete Monomere A enthalten vorzugsweise eine copolymerisierbare, ethylenisch ungesättigte Gruppe und eine Gruppe der Formel I.

Vorzugsweise handelt es sich dabei um Verbindungen der Formel 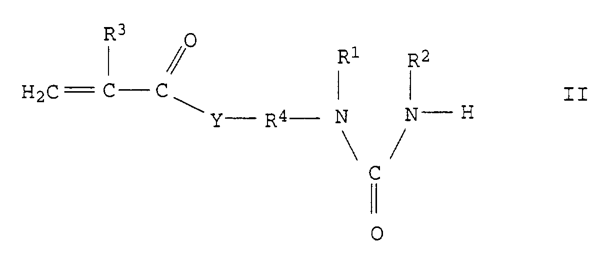 worin R³ für ein H-Atom oder eine Methylgruppe, Y für -O- oder -NH-, R⁴ für eine zweiwertige C₁-C₁₀-Alkylengruppe stehen und R¹, R² die oben genannte Bedeutung haben.

Vorzugsweise steht R³ für Wasserstoff oder eine Methylgruppe, Y für -O-, R⁴ für eine C₂-C₆-Alkylengruppe und R¹ und R² gemeinsam für eine C₂-C₄-Alkylengruppe.

Besonders bevorzugt ist (1-(2-Methacrylogloxyethyl)imidazolin 2-on, bekannt als Ureidoethylenmethacrylat (R¹, R² = Ethylen; Y = O; R³ = Methyl, R⁴ = Ethylen kurz UMA): 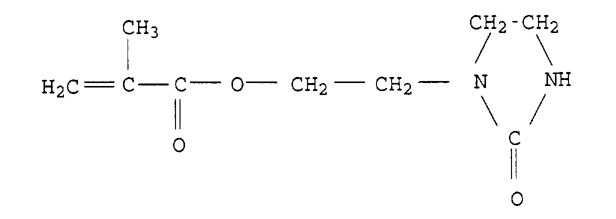 oder Ureidoethylenacrylat.

Die erfindungsgemäße wäßrige Polymerdispersion enthält weiterhin eine hydrolisierbare Siliziumgruppe, d.h. eine Silziumgruppe, die nach Hydrolyse mindestens eine direkt an das Si-Atom gebundene Hydroxylgruppe enthält.

Insbesondere handelt es sich um eine Siliziumgruppe der Formel 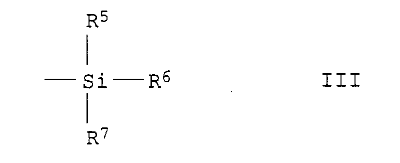 worin R⁵ bis R⁷ jeweils unabhängig voneinander für eine C₁-C₈, insbesondere C₁-C₄ Alkyl- oder -Alkoxygruppe stehen, mit der Maßgabe, daß mindestens einer der Reste R⁵ bis R⁷ für eine Alkoxygruppe steht.

Besonders bevorzugt stehen alle Reste R⁵ - R⁷ für eine C₁-C₈, vorzugsweise C₁-C₄ Alkoxygruppe, insbesondere für eine Methoxygruppe.

Der Gehalt der hydrolisierbaren Siliziumgruppe in der wäßrigen Polymerdispersion beträgt 0,0001 bis 1 mol. Vorzugsweise beträgt der Gehalt mindestens 0,0005 Mol; der Gehalt beträgt nicht mehr als 1 Mol, vorzugsweise nicht mehr als 0,5 Mol, insbesondere nicht mehr als 0,1 Mol und ganz besonders bevorzugt nicht mehr als 0,05 Mol und insbesondere nicht mehr als 0,01 Mol, bezogen jeweils auf 100 g der in der Dispersion dispergierten Polymere.

Das Molverhältnis der Harnstoff- oder Thioharnstoffgruppe zur Siliziumgruppe beträgt vorzugsweise 1:10 bis 10:1, besonders bevorzugt 1:5 bis 5:1.

Auch die hydrolisierbare Siliziumgruppe kann Bestandteil einer niedermolekularen, nicht-polymeren Verbindung sein, welche in dem Dispersionswasser gelöst oder dispergiert ist.

Insbesondere haben derartige Verbindungen mindestens 2, vorzugsweise 2 bis 4 hydrolisierbare Siliziumgruppen. Falls diese Verbindungen nur eine hydrolisierbare Siliziumgruppe haben, hat diese Siliziumgruppe jedoch vorzugsweise mindestens zwei hydrolisierbare Gruppen.

Vorzugsweise ist die hydrolisierbare Siliziumgruppe an das Polymer gebunden. Besonders bevorzugt sind sowohl die Harnstoff- oder Thioharnstoffgruppe und auch die hydrolisierbare Siliziumgruppe an das Polymer gebunden.

Im bevorzugten Fall des radikalisch polymerisierten Polymeren können z.B. Monomere mit einer hydrolisierbaren Siliziumgruppe als Comonomere bei der Polymerdispersion eingesetzt werden (Monomer B). Geeignet sind auch Polymerisationsregler z.B. mit einer -S-H Gruppe und einer hydrolisierbaren Siliziumgruppe (Regler B).

Derartige Regler B werden bei der radikalischen Polymerisation endständig an die Polymerketten gebunden.

Geeignete Monomere B sind z.B. solche der Formel 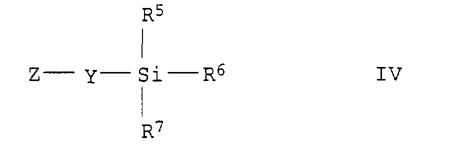 in der Z für eine

Vinylgruppe (H₂C = CH ― )

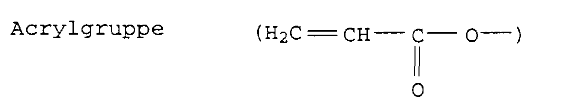

oder 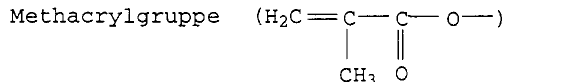 steht,
Y für ein Bindeglied mit bis zu 20 C-Atomen steht, wobei Y auch entfallen kann, wenn Z für eine Vinylgruppe steht, und
R⁵ bis R⁷ die oben genannte Bedeutung haben.

Bevorzugt steht Z für eine Acryl- oder Methacrylgruppe und Y für eine C₁-C₆-Alkylengruppe.

Geeignete Regler B sind z.B. solche der Formel 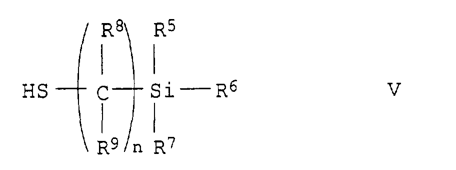 in der R⁸ und R⁹ unabhängig für ein Wasserstoffatom oder eine C₁-C₄-Alkylgruppe stehen, n für eine Zahl von 0 bis 10, vorzugsweise 1 bis 8 steht und R⁵ - R⁷ die oben genannte Bedeutung haben.

Bei den in der erfindungsgemäßen Polymerdispersion dispergierten Polymeren handelt es sich vorzugsweise um radikalisch polymerisierte Polymere.

Vorzugsweise besteht das radikalisch polymerisierte Polymer zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt, mit einer Doppelbindung z.B. Ethylen oder Propylen.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das radikalisch polymerisierte Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl- (meth-)acrylat genannt.

Als weitere Monomere seien auch vernetzende Monomere genannt.

Im Falle der bereits oben beschriebenen bevorzugten Ausführungsformen werden auch Monomere mit Harnstoff- oder Thioharnstoffgruppen bzw. Monomere mit hydrolisierbaren Siliziumgruppen mitverwendet.

Die Herstellung der radikalisch polymerisierten Polymere erfolgt in einer bevorzugten Ausführungsform durch Emulsionspolymerisation, es handelt sich daher um ein Emulsionspolymerisat.

Die Herstellung kann jedoch z. B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈-bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsälze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 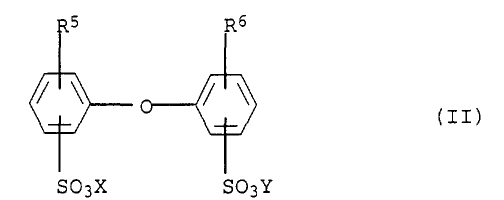 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi-oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/ neuer Teilchengeneration/en kann zu einem beliebigen Zeitpunkt erfolgen. Er richtet sich nach den für eine niedrige Viskosität angestrebten Teilchengrößenverteilung.

Das so hergestellte radikalisch polymerisierte Polymer wird vorzugsweise in Form seiner wäßrigen Dispersion verwendet.

Die Herstellung der erfindungsgemäßen Polymerdispersion kann auf einfache Weise erfolgen, z.B.
a) durch Mischen von unterschiedlichen Polymeren, z.B. von unterschiedlichen Polymerdispersionen, wie sie durch Emulsionspolymerisation erhältlich sind; (insbesondere können sich die Polymeren darin unterscheiden, daß ein Polymer die Harnstoff-oder Thioharnstoffgruppen und ein anderes Polymer die hydrolisierbaren Siliziumgruppen enthält)
b) durch Zugabe von niedermolekularen Verbindungen, welche Harnstoff- oder Thioharnstoffgruppen enthalten zu einer wäßrigen Polymerdispersion, wie sie z.B. durch Emulsionspolymerisation erhältlich ist, wobei das dispergierte Polymer bereits hydrolisierbare Siliziumgruppen enthalten kann
c) wie bei b), wobei jedoch die niedermolekulare Verbindungen hydrolisierbare Siliziumgruppen und das Polymer Harnstoff-oder Thioharnstoffgruppen enthält
d) durch Zugabe von niedermolekularen Verbindungen mit Harnstoff- oder Thioharnstoffgruppen und niedermolekularen Verbindungen mit hydrolisierbaren Siliziumgruppen zu einer wäßrigen Polymerdispersion
e) im bevorzugten Fall sind sowohl die Harnstoff- oder Thioharnstoffgruppen als auch die hydrolisierbaren Siliziumgruppen an das Polymer gebunden, die erfindungsgemäße Polymerdispersion ergibt sich darin z.B. bei Mitverwendung geeigneter Monomere (s.o.) direkt als Produkt der Emulsionspolymerisation.

Die erfindungsgemäße Polymerdispersion eignet sich als Bindemittel für unterschiedlichste Anwendungen, z.B. als Bindemittel für Beschichtungsmassen, z.B. Anstrichfarben oder Papierstreichmassen.

Insbesondere eignet sie sich als Bindemittel für Klebstoffe und Dichtungsmassen, insbesondere für Klebstoffe für keramische Fliesen.

Im Falle der Verwendung für Dichtungsmassen haben die Polymeren in der wäßrigen Dispersion eine Glasübergangstemperatur von vorzugsweise -60 bis +40°C, besonders bevorzugt von -60 bis +10°C und ganz besonders bevorzugt von -55 bis -5°C.

Die Glasübergangstemperatur läßt sich nach üblichen Methoden wie Differentialthermoanalyse oder Differentail Scanning Calorimetrie (s. z.B. ASTM 3418/82, sog. "midpoint temperature") bestimmen.

Im Falle der Verwendung als Klebstoff für keramische Fliesen beträgt die Glasübergangstemperatur bevorzugt -10 bis +20°C.

Im Falle der Verwendung als Bindemittel für Dichtungsmassen oder Klebstoffe werden den erfindungsgemäßen Polymerdispersionen vorzugsweise anorganische Füllstoffe zugesetzt.

Als Füllstoffe seien Aluminiumsilicate, Quarz, gefällte oder pyrogene Kieselsäure, Leicht- und Schwerspat, Talcum, Dolomit und bevorzugt Calciumcarbonat genannt. Weiterhin kommen z.B. für Dichtungsmassen farbgebende Füllstoffe in Betracht, Titanweiß, Bleiweiß, Zinkweiß, Lithophone und Antimonweiß, Eisenoxidschwarz, Manganschwarz, Cobaltschwarz, Antimonschwarz und Ruß, Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb.

Der Gewichtsanteil der Füllstoffe beträgt im Falle der Verwendung als Klebstoff für keramische Fliesen vorzugsweise 100 bis 3000 Gew.-Teile, besonders bevorzugt 200 bis 2000 Gew.-Teile, bezogen auf 100 Gew.-Teile Polymer.

Im Falle der Verwendung als Dichtungsmasse beträgt der Gewichtsanteil der Füllstoffe vorzugsweise 50 bis 2000 Gew.-Teile, bezogen auf 100 Gew.-Teile Polymer.

Weitere Hilfsmittel, welche der Polymerdispersion bei der jeweiligen Verwendung zugesetzt werden können, sind z.B. Weichmacher, Verlaufsmittel, Verdicker etc.

Mit den erfindungsgemäßen Polymerdispersionen werden wasserfeste und wärmebeständige Beschichtungen, Abdichtungen und Verklebungen erhalten.

### Beispiele

### I Herstellung der Polymerdispersion

| Grundrezeptur (V1) | | |
|---|---|---|
| Vorlage | 10,6 g | Polystyrolsaat |
| | 280 g | Wasser |
| | 2,8 g | Zulauf 2 |
| Zulauf 1 | 265 g | Wasser |
| | 38,9 g | Dowfax® 2A1 (45%ig), ein Emulgator (s.o.) |
| | 5,8 g | Disponil® FES 77 (30%ig), ein ethoxylierter Fettalkohol (Emulgator) |
| | 7 g | Acrylsäure |
| | 3,5 g | 3-Methacryloxypropyltrimethoxysilan (MEMO) |
| | 344,75 g | Styrol |
| | 344,75 g | Ethylhexylacrylat |
| Zulauf 2 | 26,6 g | Wasser |
| | 1,4 g | Natriumpersulfat |

Die Vorlage wurde 5 Minuten anpolymerisiert, danach Zuläufe 1 und 2 gleichzeitig gestartet und über 180 Minuten zugefahren.
Danach wurde noch 30 Minuten bei 85°C nachpolymerisiert, anschließend chemisch desodoriert und neutralisiert.

Die Herstellung der Versuche D1 - D3 und V2 erfolgte entsprechend.

Bei den erfindungsgemäßen Versuchen D1-D3 wurden in Zulauf 1 zusätzlich die in Tab. 1 angegebenen Mengen Ureidoethylenmethacrylat (UMA) gegeben (25% in Methylmethacrylat)

Die Menge Styrol der Grundrezeptur wurde entsprechend verringert.

Beim Vergleichsversuch V2 wurde kein MEMO, sondern nur 28 g UMA verwendet.

**Tab 1:**

| Mengen MEMO, UMA in Polymer | | |
|---|---|---|
| | MEMO | UMA (25% in Methylmethacrylat) |
| V1 | 3,5 g | - |
| V2 | - | 28 g |
| D1 | 3,5 g | 8,4 g |
| D2 | 3,5 g | 14 g |
| D3 | 3,5 g | 28 g |

Entsprechend wurde ein weiteres Beispiel D4 hergestellt:

| | | |
|---|---|---|
| Vorlage | 10,6 g | Polystyrolsaat |
| | 280 g | Wasser |
| | 2,8 g | Zulauf 2 |
| Zulauf 1 | 275 g | Wasser |
| | 38,9 g | Dowfax 2A1 (45%ig) |
| | 5,8 g | Disponil FES 77 (30%ig) |
| | 7 g | Acrylsäure |
| | 0,7 g | Butandioldiacrylat |
| | 1,4 g | 3-Mercaptopropyltrimethoxysilan |
| | 318 g | Styrol |
| | 344,9 g | Ethylhexylacrylat |
| | 28 g | Ureidoethylenmethacrylat (25%ig in Methyl-meth-acrylat) |
| Zulauf 2 | 26,6 g | Wasser |
| | 1,4 g | Natriumpersulfat |

### II Herstellung der Fliesenkleber und anwendungstechnische Prüfung

Die Fliesenkleber wurden durch Mischen folgender Bestandteile hergestellt (Teile sind Gewichtsteile).

| | |
|---|---|
| 67 | Teile Wasser |
| 1 | Teil Lumiten® EL (ein Entschäumer der BASF) |
| 5 | Teile Walocel® MW 40000 PFV (ein Celluloseether der Firma Wolffwalsrode) |
| 202 | Teile Dispersion der Beispiele V1, V2 und D1-D4 |
| 290 | Teile Omyacarb® 130 (Kreide, Firma Omya) |
| 435 | Teile Omyacarb® 40 (Kreide, Firma Omya) |

### Scherfestigkeit

Die Prüfung der Scherfestigkeit erfolgte nach DIN EN 1324 (3/99).
- Scherfestigkeit 1:: Scherfestigkeit nach 14 Tagen Lagerung im Normklima + 7 Tagen Wasserlagerung
- Scherfestigkeit 2:: Scherfestigkeit nach 7 Tagen Lagerung im Normklima + 14 Tagen Lagerung bei 70°C, Prüfung erfolgt mit warmen Prüfkörpern

| Ergebnisse: | | | | | | |
|---|---|---|---|---|---|---|
| | V1 | V2 | D1 | D2 | D3 | D4 |
| Scherfestigkeit 1 [N/mm²] | 0,4 | 0,06 | 0,6 | 0,6 | 0,5 | 0,2 |
| Scherfestigkeit 2 [N/mm²] | 0,9 | 1,3 | 1,2 | 1,6 | 1,9 | 1,7 |

## Patentansprüche

1. Wäßrige Polymerdispersion, **dadurch gekennzeichnet, daß** die Dispersion 0,0001 bis 1 mol einer hydrolisierbaren Siliziumgruppe und 0,0001 bis 1 mol einer Harnstoff - oder Thioharnstoffgruppe, bezogen jeweils auf 100 g der in der Dispersion vorliegenden Polymeren, enthält.

2. Wäßrige Polymerdispersion gemäß Anspruch 1, **dadurch gekennzeichnet, dass** es sich um die wäßrige Dispersion eines radikalisch polymerisierten Polymeren handelt.

3. Wäßrige Polymerdispersion gemäß einem der Ansprüche 1 oder 2, **dadurch gekennzeichnet, daß** die Harnstoff-oder Thioharnstoffgruppe an das Polymer gebunden ist.

4. Wäßrige Polymerdispersion gemäß Anspruch 3, **dadurch gekennzeichnet, daß** es sich um eine Harnstoff-oder Thioharnstoffgruppe der Formel 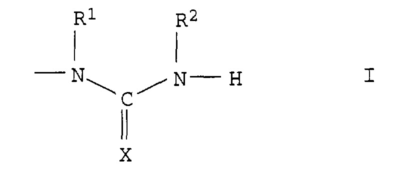 handelt, worin R¹ und R² unabhängig voneinander für ein Wasserstoffatom oder eine C₁ bis C₅ Alkylgruppe oder R¹ und R² zusammen für eine überbrückende C₂ bis C₄ Alkylengruppe, die bis zu zweifach mit einer C₁ bis C₄ Alkoxygruppe oder Hydroxylgruppe substituiert sein kann, stehen und X für O oder S steht.

5. Wäßrige Polymerdispersion gemäß einem der Ansprüche 3 oder 4, **dadurch gekennzeichnet, dass** die Harnstoff- oder Thioharnstoffgruppe durch Copolymerisation mit der ethylenisch ungesättigten Verbindung der Formel 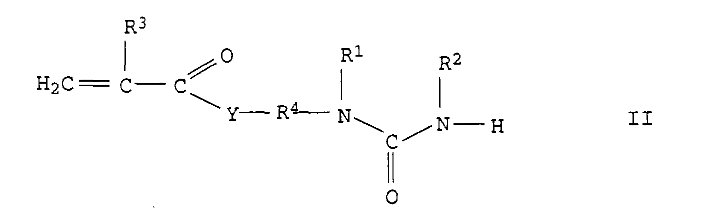 an das Polymer gebunden ist, wobei R¹ und R² die oben genannte Bedeutung haben, R³ für ein H-Atom oder eine Methylgruppe steht, Y für -O- oder -NH- und R⁴ für eine C₁-C₁₀ Alkylengruppe stehen.

6. Wäßrige Polymerdispersion gemäß einem der Ansprüche 1 bis 5, **dadurch gekennzeichnet, dass** die hydrolisierbare Siliziumgruppe an das Polymer gebunden ist.

7. Wäßrige Polymerdispersion gemäß einem der Ansprüche 1 bis 6, **dadurch gekennzeichnet, daß** es sich um eine hydrolisierbare Siliziumgruppe der Formel 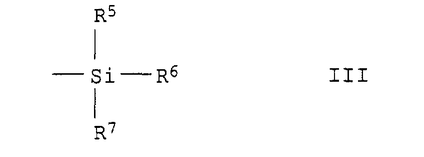 handelt, worin R⁵ bis R⁷ jeweils unabhängig voneinander für eine C₁ bis C₈ Alkyl - oder - Alkoxygruppe stehen, mit der Maßgabe, dass mindestens einer der Reste R⁵ bis R⁷ für eine Alkoxygruppe steht.

8. Wäßrige Polymerdispersion gemäß einem der Ansprüche 1 bis 7, **dadurch gekennzeichnet, dass** sowohl die Harnstoff-oder Thioharnstoffgruppe als auch die hydrolisierbare Siliziumgruppe an das Polymer gebunden sind

9. Wäßrige Polymerdispersion gemäß einem der Ansprüche 1 bis 7, **dadurch gekennzeichnet, dass** das dispergierte Polymer zu mindestens 40 Gew.-% aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren aufgebaut ist.

10. Verwendung der wäßrigen Polymerdispersion gemäß einem der Ansprüche 1 bis 9 als Bindemittel für Dichtungsmassen oder Klebstoffe

11. Verwendung der wäßrigen Polymerdispersion gemäß einem der Ansprüche 1 bis 9 als Bindemittel für Fliesenklebstoffe.
